# EUROPÄISCHE PATENTSCHRIFT

(11) **EP 3 711 275 B1**
(45) Veröffentlichungstag und Bekanntmachung des Hinweises auf die Patenterteilung: **14.07.2021**
(21) Anmeldenummer: 18803952.3
(22) Anmeldetag: 14.11.2018
(51) Int. Cl.: H04L 29/06, H04L 9/08, H04L 29/08, G05B 19/042

(54) **VERSCHLÜSSELTES KOMMUNIZIEREN IN EINER PROZESSTECHNISCHEN ANLAGE**
ENCRYPTED COMMUNICATION IN A PROCESSING INSTALLATION
COMMUNICATION CHIFFRÉE DANS UNE INSTALLATION DE LA TECHNIQUE DES PROCESSUS

(30) Priorität: 15.11.2017 DE 102017126916
(43) Veröffentlichungstag der Anmeldung: 23.09.2020
(73) Patentinhaber: Samson Aktiengesellschaft, 60314 Frankfurt am Main (DE)
(72) Erfinder: WIDL, Andreas, 81675 München (DE); URBAS, Leon, 10713 Berlin (DE)
(74) Vertreter: Schmid, Nils T.F.
(86) Internationale Anmeldenummer: PCT/EP2018/081240
(87) Internationale Veröffentlichungsnummer: WO 2019/096849

(56) Entgegenhaltungen:
- EP-A1- 3 043 224
- GB-A- 2 524 987
- US-A1- 2005 273 609
- US-A1- 2010 082 983

## Beschreibung

Die Erfindung betrifft ein Verfahren zum verschlüsselten Kommunizieren in einer prozesstechnischen Anlage, wie eine chemische Anlage, ein Kraftwerk, eine Lebensmittel verarbeitende Anlage oder dergleichen, zwischen wenigstens einem ersten und einem zweiten Kommunikationspartner. Die Erfindung betrifft auch ein Feldgerät, wie eine Stellarmatur, beispielsweise ein Stellventil oder eine Pumpe, zum Einstellen eines Prozessfluides, welches einer der Kommunikationspartner sein kann. Die Erfindung betrifft auch eine Kontrollelektronik, wie eine Leitwarte, die einer der Kommunikationspartner sein kann. Ferner betrifft die Erfindung eine prozesstechnische Anlage.

Das Feldgerät kann mit Hilfsenergie, wie pneumatische Hilfsenergie, betrieben werden, wobei insbesondere ein vorzugsweise pneumatischer Stellantrieb über einen insbesondere elektropneumatischen Stellungsregler betätigt werden kann. Bei Feldgeräten, wie Stellventilen und/oder Pumpen, welche eine Prozessfluidströmung in einer prozesstechnischen Anlage beeinflussen, insbesondere steuern und/oder regeln, können unterschiedliche Zustände auftreten. Zur zentralen Kontrolle der Prozesse einer prozesstechnischen Anlage ist in der Regel eine Leitwarte vorgesehen, die mehrere Feldgeräte überwacht und/oder kontrolliert. Zwischen den Feldgeräten der Leitwarte findet zu diesem Zweck Kommunikation statt. Es ist denkbar, dass die Leitwarte mit einzelnen Feldgeräten über ein Netzwerk kommuniziert, welches Schnittstellen aufweist, die über die Kommunikation zwischen Feldgeräten und Leitwarte erfolgen könnte. Beispielsweise kann die Kommunikation über das Internet erfolgen. Um einen unerwünschten Zugriff auf die Kommunikation zwischen Leitwarte und Feldgeräten zu unterbinden, kann die Kommunikation verschlüsselt erfolgen. Zur verschlüsselten Kommunikation ist es erforderlich, dass ein Empfänger dazu in der Lage ist, eine verschlüsselte Nachricht von einem Sender zu empfangen und zu dekodieren. Zu diesem Zweck kann ein Schlüssel zwischen dem Sender und dem Empfänger ausgetauscht werden. Ein besonders sicheres Verfahren zur verschlüsselten Kommunikation ist beispielsweise von der Patentanmeldung mit dem Aktenzeichen DE 2017 119 406.1 bekannt. Gemäß diesem Verfahren kann beispielsweise eine Nachricht mithilfe eines hybriden Verschlüsselungsverfahrens erzeugt werden, bei dem eine einfache, symmetrische Verschlüsselung eines Nachrichteninhalts erfolgt und der symmetrische Schlüssel selbst asymmetrisch verschlüsselt und separat, beispielsweise vorab, kommuniziert wird. Im Vergleich zu Kommunikationsverfahren, bei denen eine vollständige Nachricht asymmetrisch verschlüsselt wird, kann dies die Kommunikation erheblich beschleunigen. Der asymmetrisch verschlüsselte Schlüssel kann über einen unsicheren Kanal, wie eine Internetverbindung, versandt werden. Die asymmetrische Verschlüsselung selbst bleibt relativ aufwendig.

EP 3 043 224 A1 betrifft Feldgeräte für Sicherheits- und Komfortanwendungen und zum Energiemanagement und konzentriert sich auf Kommunikationseigenschaften solcher Geräte.

US 2010/0082983 A1 betrifft die sichere Verknüpfung von Geräten. US 2005/0273609 A1 bezieht sich auf ein Verfahren zum Einrichten einer kabellosen Kurzstreckenkommunikation zwischen einem ersten und einem zweiten Gerät. GB 2 524 987 A beschreibt das sichere Teilen von Sitzungsschlüsseln zwischen Geräten. Es ist eine Aufgabe der Erfindung, die Nachteile des Stands der Technik zu überwinden und insbesondere ein alternatives Verfahren zum verschlüsselten Kommunizieren in einer prozesstechnischen Anlage bereitzustellen, was eine schnelle Kommunikation bei hoher Datenübertragungsrate und sehr hoher Zugriffssicherheit gewährleistet.

Diese Aufgabe wird gelöst durch die Gegenstände der unabhängigen Ansprüche 1, 3, 4 und 5.

Demnach ist ein Verfahren zum verschlüsselten Kommunizieren zwischen wenigstens einem ersten und einem zweiten Kommunikationspartner in einer prozesstechnischen Anlage, wie eine chemische Anlage, beispielsweise eine petrochemische Anlage, ein Kraftwerk, beispielsweise ein Nuklearkraftwerk, eine Lebensmittel verarbeitende Anlage, beispielsweise eine Brennerei, oder dergleichen vorgesehen. Ein Kommunikationspartner der prozesstechnischen Anlage kann ein Feldgerät sein, wie eine Stellarmatur zum Einstellen eines Prozessfluides der prozesstechnischen Anlage. Ein als Kommunikationspartner ausgeführtes Feldgerät kann beispielsweise ein Stellventil oder eine Pumpe sein. Ein Kommunikationspartner kann beispielsweise eine Kontrollelektronik, wie eine Leitwarte einer prozesstechnischen Anlage, zum Überwachen, Steuern und/oder Regeln von Prozessen der prozesstechnischen Anlage sein. Bei dem erfindungsgemäßen Verfahren zum verschlüsselten Kommunizieren zwischen wenigstens einem ersten und einem zweiten sowie gegebenenfalls weiteren Kommunikationspartnern ist wenigstens einer der Kommunikationspartner ein Feldgerät oder eine Kontrollelektronik. Vorzugsweise kann das Verfahren zum verschlüsselten Kommunizieren in einer prozesstechnischen Anlage in einem Netzwerk einer Vielzahl von Kommunikationspartnern der prozesstechnischen Anlage durchgeführt werden. Ein Kommunikationsnetzwerk in einer prozesstechnischen Anlage kann eine Vielzahl von Feldgeräten und wenigstens eine Kontrollelektronik in Form einer zentralen Leitwarte zur zentralen Überwachung, Steuerung und/oder Regelung der Prozesse der Anlage umfassen. Die Feldgeräte, welche Kommunikationspartner in dem Kommunikationsnetzwerk einer solchen prozesstechnischen Anlage bilden, können unterschiedlich sein, beispielsweise kann die Anlage mehrere gleichartige und/oder mehrere unterschiedliche Stellventile, mehrere gleichartige und/oder mehrere unterschiedliche Pumpen sowie gegebenenfalls andere Feldgeräte, beispielsweise Messgeräte ohne Stellfunktion einer Stellarmatur, umfassen.

Bei dem erfindungsgemäßen Verfahren wird ein Schlüssel zum Codieren von elektronischen Signalen betreffend die prozesstechnische Anlage bereitgestellt. Die elektronischen Signale, welche die prozesstechnische Anlage betreffen, können beispielsweise Stellsignale, Messsignale, Zustandssignale, Warnsignale oder dergleichen sein. Elektronische Signale betreffend eine prozesstechnische Anlage können Signale sein, die beispielsweise von einem Feldgerät an ein anderes Feldgerät gesendet werden. Elektronische Signale betreffend eine prozesstechnische Anlage können von einem Feldgerät an eine Kontrollelektronik gesendet werden. Es ist denkbar, dass ausgehend von einer Kontrollelektronik elektronische Signale betreffend die prozesstechnische Anlage an ein oder mehrere Feldgeräte gesendet werden. Der Schlüssel zum Codieren eines elektronischen Signales kann beispielsweise ein Einmalschlüssel sein. Der Codierschlüssel kann 8 bit, 32 bit, 64 bit, 128 bit oder größer sein. Es kann bevorzugt sein, dass zur Kommunikation von zwei vorbestimmten Kommunikationspartnern fortlaufend wechselnde Schlüssel verwendet werden. Beispielsweise können Einmalschlüssel verwendet werden, welche nach Einmalgebrauch nicht noch einmal verwendet werden. Es ist auch denkbar , dass ein Schlüssel, der zur Kommunikation von zwei Kommunikationspartnern der prozesstechnischen Anlage verwendet wird, in regelmäßigen Zeitabständen, beispielsweise nach höchstens einer Minute, höchstens zehn Minuten, höchstens einer Stunde und/oder nach einer bestimmten Anzahl gesendeter verschlüsselter elektronischer Signale, beispielsweise nach drei Nachrichten, fünf Nachrichten oder zehn Nachrichten, durch einen neuen Schlüssel ersetzt wird. Das Bereitstellen eines Schlüssels von einem ersten Kommunikationspartner zur Kommunikation mit wenigstens einem weiteren Kommunikationspartner kann in regelmäßigen Abständen und/oder auf Anfrage eines anderen Kommunikationspartners erfolgen. Die Bereitstellung eines Schlüssels zum Kodieren von elektronischen Signalen kann die Bereitstellung mehrerer unterschiedlicher Schlüssel umfassen, welche beispielsweise zur Verschlüsselung unterschiedlicher Nachrichten vorgesehen sein können.

Erfindungsgemäß wird der Schlüssel als Akustiksignal über eine Anlagenfluid führende Rohrleitung von dem ersten Kommunikationspartner an den zweiten und/oder gegebenenfalls weitere Kommunikationspartner übermittelt. Die Rohrleitung kann beispielsweise ein Prozessfluid der prozesstechnischen Anlage führen, welches mit einer Stellarmatur einstellbar ist. Die Rohrleitung kann ein Hilfsenergiefluid führen, beispielsweise ein Pneumatikfluid zur Betätigung pneumatischer Stellaktuatoren einer Stellarmatur. Das Akustiksignal kann einen beispielsweise binären Schlüssel als amplitudenmoduliertes Signal, pulsweitenmoduliertes Signal, frequenzmoduliertes Signal oder dergleichen repräsentieren. Bei dem erfindungsgemäßen Verfahren zum verschlüsselten Kommunizieren in einer prozesstechnischen Anlage kann durch die Übersendung der Schlüssel als Akustiksignal mittels der Rohrleitungen in der prozesstechnischen Anlage auf einfache Weise mit einem bestehenden System sichergestellt werden, dass ein unbefugter Zugriff von außen keine Kenntnis über den Schlüssel zum Codieren von elektronischen Signalen zwischen den Kommunikationspartnern der prozesstechnischen Anlage bewirken kann. Fluid führenden Rohrleitungen in der prozesstechnischen Anlage werden als sekundäres Kommunikationsnetzwerk zur sicheren Übertragung der Kommunikationsschlüssel verwendet. Für den Zugriff auf dieses sekundäre akustische Kommunikationsnetzwerk ist ein unmittelbarer physikalischer Zugriff auf die prozesstechnische Anlage erforderlich. Auf diese Weise ist sichergestellt, dass selbst dann, wenn ein unsicheres Netzwerk zur Kommunikation elektrischer Signale betreffend die prozesstechnische Anlage zwischen deren Kommunikationspartner verwendet wird ein von diesem Netzwerk getrenntes zweites, physikalisch isoliertes und somit sicheres Kommunikationsnetzwerk bereitgestellt ist. Das erfindungsgemäße Verfahren erlaubt die Nachrüstung bestehender prozesstechnischer Anlagen zur signifikanten Erhöhung der Betriebssicherheit ohne Beeinträchtigung der möglichen Datengeschwindigkeiten und Datenvolumina des elektronischen Kommunikationsnetzwerks.

Gemäß einer bevorzugten Ausführung der Erfindung wird ein elektronisches Signal, wie ein Stellsignal, ein Messsignal, ein Zustandssignal, ein Warnsignal oder dergleichen bereitgestellt und mit dem zuvor bereitgestellten Schlüssel codiert. Anschließend wird das codierte elektronische Signal von einem Kommunikationspartner an wenigstens einen anderen Kommunikationspartner oder genau einen anderen Kommunikationspartner übermittelt.

Die Erfindung betrifft auch ein Feldgerät, wie eine Stellarmatur zum Einstellen eines Prozessfluides. Eine Stellarmatur kann beispielsweise als Stellventil oder Pumpe ausgestaltet sein. Das Feldgerät ist für eine prozesstechnische Anlage, wie eine chemische Anlage, ein Kraftwerk, eine Lebensmittel verarbeitende Anlage oder dergleichen eingerichtet. Das erfindungsgemäße Feldgerät umfasst eine Kommunikationselektronik zum Senden und/oder zum Empfangen von elektronischen Signalen, wie Stellsignale, Messsignale, Zustandssignale, Warnsignale oder dergleichen, an eine bzw. von einer Kontrollelektronik zum Überwachen, Steuern und/oder Regeln von Prozessen der prozesstechnischen Anlage. Es ist denkbar, dass die Kommunikationselektronik nur zum Empfangen von elektronischen Signalen von der Kontrollelektronik ausgestaltet ist. Eine Kommunikationselektronik kann sowohl zum Senden von elektronischen Signalen an eine Kontrollelektronik als auch zum Empfangen von elektronischen Signalen von der Kontrollelektronik ausgestaltet sein. Es ist ferner denkbar, dass die Kommunikationselektronik des Feldgerätes zum Senden und/oder Empfangen von elektronischen Signalen an andere bzw. von anderen Feldgeräte(n) eingerichtet ist. Die Kommunikationselektronik des erfindungsgemäßen Feldgerätes ist dazu eingerichtet, mit einem Schlüssel codierte elektronische Signale zu verarbeiten. Die Kommunikationselektronik des erfindungsgemäßen Feldgerätes weist einen elektronischen, vorzugsweise kabelgebundenen oder kabellosen, Signalaus- und/oder -eingang für die elektronischen Signale auf. Beispielsweise kann das Feldgerät eine Kommunikationselektronik mit einer HART- und/oder einem Fieldbus-Anschluss aufweisen. Es ist denkbar, dass die Kommunikationselektronik einen kabellosen Funksignalaus- und/oder -eingang, beispielsweise einen WLAN- oder WIFI-Transceiver umfasst.

Erfindungsgemäß umfasst das Feldgerät ferner eine akustische Sende- und/oder Empfangsvorrichtung zum Übermitteln des Schlüssels als Akustiksignal über eine Anlagenfluid führende Rohrleitung an die Kontrollelektronik bzw. von der Kontrollelektronik. Die Rohrleitung kann insbesondere ein Prozessfluid oder ein Hilfsenergiefluid führen. Die akustische Sende- und/oder Empfangsvorrichtung umfasst wenigstens einen Akustiksignalgenerator, wie ein Akustik-Signalemitter, und/oder wenigstens einen Akustiksignalempfänger, wie ein Mikrophon. Es ist denkbar, dass Signalgenerator und Signalempfänger in Funktionsunion beispielsweise durch ein Akustik-Piezoelement realisiert sind.

Die Erfindung betrifft auch eine Kontrollelektronik für eine prozesstechnische Anlage, wie eine chemische Anlage, ein Kraftwerk, eine Lebensmittel verarbeitende Anlage oder dergleichen, zum Überwachen, Steuern und/oder Regeln von Prozessen der prozesstechnischen Anlage. Die Kontrollelektronik umfasst eine Kommunikationseinrichtung zum Senden und/oder Empfangen von elektronischen Signalen wie Stellsignale, Warnsignale oder dergleichen, an ein bzw. von einem Feldgerät der prozesstechnischen Anlage, wie eine Stellarmatur, beispielsweise ein Stellventil oder eine Pumpe, zum Einstellen eines Prozessfluides. Die Kommunikationseinrichtung ist dazu eingerichtet, mit einem Schlüssel codierte elektronische Signale zu verarbeiten. Die Kommunikationseinrichtung der Kontrollelektronik weist einen elektronischen, vorzugsweise kabelgebundenen oder kabellosen, Kontrollaus- und/oder -eingang für die elektronischen Signale auf. Vorzugsweise umfasst die Kontrollelektronik eine oder mehrere Kommunikationseinrichtungen mit mehreren Kontrolleingängen und mehreren Kontrollausgängen. Die Kontrollausgänge dienen dazu, vorzugsweise verschlüsselte elektronische Signale von der Kontrollelektronik an deren Kommunikationspartner, wie eine oder mehrere Feldgeräte, zu senden. Die Eingänge der Kontrollelektronik dienen der Kontrollelektronik zum Empfangen von betreffenden elektronischen Signalen, die die prozesstechnische Anlage, insbesondere Messsignalen, Warnsignalen und Statussignalen, welche die Kontrollelektronik zur Diagnose-, Steuerungs- und/oder Regelungszwecke verarbeiten kann.

Die Kontrollelektronik umfasst ferner wenigstens eine akustische Sende- und/oder Empfangsvorrichtung zum Übermitteln des Schlüssels als Akustiksignal über eine Anlagenfluid führende Rohrleitung an wenigstens ein Feldgerät bzw. von wenigstens einem Feldgerät. Es ist denkbar, dass die Kontrollelektronik einem Feldgerät oder mehreren Feldgeräten den Kommunikationsschlüssel als Akustiksignal mitteilt. Es kann bevorzugt sein, dass wenigstens ein Feldgerät oder mehrere Feldgeräte je einen akustischen Schlüssel bereitstellen und diese über die Rohrleitung an die Kontrollelektronik übermitteln. Die akustische Sende- und/oder Empfangsvorrichtungen der Kontrollelektronik kann über eine elektronische Kommunikationsleitung mit einer Recheneinheit der Kontrollelektronik verbunden sein und in einem Abstand zu der Recheneinheit der Kontrollelektronik angeordnet sein. Beispielweise kann die Recheneinheit innerhalb von einem zentralen Steuerraum in einer prozesstechnischen Anlage angeordnet sein, durch den keine Rohrleitung mit Prozessfluid oder Hilfsmittelfluid führt. Zu diesem Zweck kann die Sende- und/oder Empfangsvorrichtung der Kontrollelektronik bezüglich der Kontrollelektronik satellitenartig ausgestaltet sein, um mit einer Rohrleitung in physikalischem Kontakt zur Übertragung von akustischem Signal zu stehen. Es ist denkbar, dass die Kontrollelektronik mehrere akustische Sende- und/oder Empfangsvorrichtungen an mehreren unterschiedlichen Rohrleitungen umfasst. Die Verwendung mehrerer Sende- und/oder Empfangsvorrichtungen an unterschiedlichen Rohrleitungen kann beispielsweise vorgesehen sein, falls in einer prozesstechnischen Anlage unterschiedliches Prozessfluid gefördert wird oder falls einzelne Kommunikationsparameter der Kontrollelektronik nur über eine spezifische Rohrleitung oder über eine andere spezifische Rohrleitung zu erreichen sind.

Die Erfindung betrifft auch eine prozesstechnische Anlage, wie eine chemische Anlage, beispielsweise eine petrochemische Anlage, insbesondere eine Raffinerie, eine Ölbohrplattform oder dergleichen, ein Kraftwerk, wie ein Nuklearkraftwerk oder ein Dampfturbinenkraftwerk, eine Lebensmittel verarbeitende Anlage oder dergleichen. Die prozesstechnische Anlage umfasst mehrere Rohrleitungen zum Führen von wenigstens einem Anlagenfluid, wie ein Prozessfluid oder ein Hilfsenergiefluid, wenigstens ein Feldgerät, wie eine Stellarmatur, beispielsweise ein Stellventil oder eine Pumpe, zum Einstellen des Prozessfluides, für die prozesstechnische Anlage und eine Kontrollelektronik zum Überwachen, Steuern und/oder Regeln von Prozessen der prozesstechnischen Anlage. Das Feldgerät kann ein erfindungsgemäßes Feldgerät sein. Die Kontrollelektronik kann eine erfindungsgemäße Kontrollelektronik sein. Die erfindungsgemäße prozesstechnische Anlage umfasst wenigstens eine akustische Sendevorrichtung zum Senden eines Schlüssels zum Codieren von elektronischen Signalen betreffend die prozesstechnische Anlage, wie Stellsignale, Messsignale, Zustandssignale, Warnsignale oder dergleichen, als Akustiksignal über wenigstens eine Rohrleitung. Die erfindungsgemäße prozesstechnische Anlage umfasst ferner wenigstens eine akustische Empfangsvorrichtung zum Empfangen des Schlüssels als Akustiksignal über die wenigstens eine Rohrleitung. Die Sendevorrichtung und die Empfangsvorrichtung sind derart über die wenigstens eine Rohrleitung mit einander verbunden, dass ein Austausch von wenigstens einem Schlüssel zwischen der Sendevorrichtung und der Empfangsvorrichtung auf akustischer Kommunikationstechnik basiert.

Beispielsweise kann der Schlüssel als akustisches pulsweitenmoduliertes, amplitudenmoduliertes und/oder frequenzmoduliertes Signal versandt werden. Es kann bevorzugt sein, das akustische Signal als Ultraschallsignal bei einem Frequenzbereich zwischen 20 kHz und 200 kHz zu senden. Insbesondere kann ein Frequenzbereich oberhalb von 30 kHz, oberhalb von 60 kHz oder oberhalb von 90 kHz und/oder unterhalb von 180 kHz, 150 kHz oder unterhalb von 120 kHz bevorzugt sein. Insbesondere kann bevorzugt sein, ein Frequenzband mit einer Breite von höchstens 50 kHz, insbesondere höchstens 25 kHz, vorzugsweise höchstens 10 kHz, besonders bevorzugst höchstens 5 kHz für die Übertragung von Schlüsseln als akustisches Signal zu definieren.

Bei der erfindungsgemäßen prozesstechnischen Anlage ist die Sendevorrichtung einem ersten Kommunikationspartner und die Empfangsrichtung einem anderen, zweiten Kommunikationspartner zugeordnet. Es ist daher klar, dass innerhalb einer erfindungsgemäßen prozesstechnischen Anlage eine Vielzahl von Sendevorrichtungen und/oder eine Vielzahl von Empfangsvorrichtungen vorgesehen sein können. Es kann ausreichend sein, wenn bei einer erfindungsgemäßen prozesstechnischen Anlage eine einzige Sendevorrichtung und wenigstens eine Empfangsvorrichtung vorgesehen sind. Ausgehend von einer einzigen akustischen Sendevorrichtung können ein oder mehrere akustische Signale zum Übermitteln von einem oder mehreren Schlüsseln zur Verschlüsselung elektronischer Signale für die Kommunikation innerhalb der prozesstechnischen Anlage bereitgestellt werden. Es ist denkbar, dass die prozesstechnische Anlage mehrere voneinander getrennte akustische Kommunikationsnetzwerke aufweist, wobei jedes einzelne akustische Kommunikationsnetzwerk einer prozesstechnischen Anlage wenigstens eine Sendevorrichtung und wenigstens eine Empfangsvorrichtung zum Austausch der Schlüssel umfasst. Beispielsweise kann ein erstes akustisches Kommunikationsnetzwerk über pneumatische Hilfsenergieleitungen definiert sein, durch die pneumatische Hilfsenergie zum Betätigen von pneumatischen Stellantrieben bereitgestellt wird. Ein zweites Kommunikationsnetzwerk kann beispielsweise als Rohrleitungssystem sein, welches Sprinklerfluid einer Feuerlöschanlage der prozesstechnischen Anlage führt. Ein drittes akustisches Kommunikationsnetzwerk kann in Form von Rohrleitungen realisiert sein, die Prozessfluid führen.

Gemäß einer Weiterbildung einer erfindungsgemäßen prozesstechnischen Anlage ist die wenigstens eine Rohrleitung zum Übertragen des Schlüssels als Akustiksignal vollständig innerhalb einer physikalischen Abschirmung, wie einer Mauer, einem Zaun oder dergleichen, untergebracht. Die vollständige Unterbringung der Rohrleitung oder des akustischen Kommunikationsnetzwerkes zum Übertragen des Schlüssels als Akustiksignal stellt sicher, dass ein unbefugter Zugriff von außerhalb der prozesstechnischen Anlage auf das akustische Kommunikationsnetzwerk praktisch ausgeschlossen ist.

Gemäß einer Weiterbildung einer prozesstechnischen Anlage ist die wenigstens eine akustische Sendevorrichtung und/oder die wenigstens eine akustische Empfangsvorrichtung zur Verwendung der Rohrwandung der Rohrleitung als Übertragungsmedium eingerichtet. Alternativ oder zusätzlich ist die akustische Sendevorrichtung und/oder die akustische Empfangsvorrichtung an der Rohrleitung angebracht. Beispielsweise bei einem Gasturbinenkraftwerk wechselt das Prozessmedium Wasser zwischen unterschiedlichen Aggregatzuständen (gasförmig, dampfförmig, flüssig), so dass sich das Prozessmedium selbst nur in einem eingeschränkten Bereich, insbesondere in dem Bereich flüssigen Prozessmediums, gut zu schneller und verlässlicher Übertragung akustischer Signale eignet, weil insbesondere Aggregatzustandsübergänge eine Störung der Übertragung akustischer Signale verursachen können. Die Übertragung von akustischen Signalen in der Rohrwandung, die beispielsweise aus Metall, insbesondere Stahl, gebildet sein kann, kann mit einer höheren Schallgeschwindigkeit als beispielsweise in einem Wasser-, Gas-, oder Wasserdampf-Medium erfolgen.

Gemäß einer anderen Weiterbildung einer erfindungsgemäßen prozesstechnischen Anlage ist die wenigstens eine akustische Sendevorrichtung und/oder die wenigstens eine akustische Empfangsvorrichtung zur Verwendung des Anlagenfluides als Übertragungsmedium eingerichtet. Beispielsweise bei chemischen Anlagen, die besonders korrosionsresistente Rohre aus Materialien, wie Keramik, Kunststoff oder dergleichen aufweisen können, ist es denkbar, dass die Rohrwandungs-Materialien als Übertragungsmedium für Akustiksignale schlechter geeignet sind als das geführte Prozessfluid oder ein Hilfsmittelfluid. Alternativ oder zusätzlich kann die wenigstens eine akustische Sendevorrichtung und/oder die wenigstens eine akustische Empfangsvorrichtung im Inneren der Rohrleitung angeordnet sein.

Es sei klar, dass der Begriff "Rohrleitung" vorwiegend als Sammelbegriff für sämtliche Anlagenfluid, das heißt insbesondere Prozessfluid, Hilfsmittelfluid, etc., führende Komponenten der prozesstechnischen Anlage verwendet werden kann. Rohrleitungen können insofern Rohrleitungen ohne zusätzliche Funktion, wie auch prozessfluidführende Feldgeräte, wie Stellventile, Pumpen, etc., Anlagenfluid-Reservoirs, Reaktorbehälter, die mit Prozessfluid geflutet sind, umfassen. Vorzugsweise bildet eine Rohrleitung ein insbesondere geschlossenes Gefäß, in dem wenigstens ein Prozessfluid geführt ist. Es ist denkbar, dass innerhalb einer Rohrleitung mehrere Prozessfluide, beispielsweise prozessfluid-Gemische, mehrphasige Prozessmedien oder Zusatzmedien, wie inerte Gase, Füllmaterialien, Umgebungsluft oder dergleichen, vorhanden sind. Es kann bevorzugt sein, dass eine Rohrleitung bzw. zumindest ein Teil eines Rohrleitungsnetzwerkes einer prozesstechnischen Anlage gegenüber der Umgebung verschlossen oder verschließbar ist.

Eine bevorzugte Weiterbildung einer erfindungsgemäßen prozesstechnischen Anlage umfasst ferner wenigstens einen Akustiksignalrepeater, der an der Rohrleitung zwischen der wenigstens einen akustischen Sendevorrichtung und der wenigstens einen akustischen Empfangsvorrichtung angeordnet ist. Der Akustiksignalrepeater ist dazu eingerichtet, ein Akustiksignal von der wenigstens einen akustischen Sendevorrichtung zu empfangen, gegebenenfalls zu verstärken, und an wenigstens eine akustische Empfangsvorrichtung zu senden. Das Senden des Akustiksignales von dem Akustiksignalrepeater kann insbesondere über wenigstens einen weiteren Akustiksignalrepeater an die wenigstens eine akustische Empfangsvorrichtung erfolgen. Der Akustiksignalrepeater kann in einem erfindungsgemäßen Feldgerät implementiert sein. Ein Akustiksignalrepeater kann insbesondere bei großen Akustikkommunikationsnetzwerken bzw. großen prozesstechnischen Anlagen zur zuverlässigen Übermittlung von Akustiksignalen vorteilhaft sein.

Gemäß einer Weiterbildung einer erfindungsmäßen prozesstechnischen Anlage umfasst diese wenigstens eine Schlüssel-Servereinrichtung, die eine akustische Sende- und/oder Empfangsvorrichtung zum Übermitteln des Schlüssels als Akustiksignal umfasst. Die Schlüssel-Servereinrichtung kann in einem erfindungsgemäßen Feldgerät implementiert sein. Es ist denkbar, eine Schlüssel-Servereinrichtung und eine Akustiksignal-Repeatervorrichtung miteinander zu kombinieren. Die Schlüssel-Servereinrichtung ist insbesondere zum Übermitteln wenigstens eines Schlüssels, vorzugsweise zahlreicher Schlüssel, als Akustiksignal insbesondere über eine Prozessfluid führende Rohrleitung, vorzugsweise an die bzw. von der Kontrollelektronik und/oder vorzugsweise an wenigstens ein bzw. von wenigstens einem Feldgerät ausgestaltet. Die Schlüssel-Servereinrichtung umfasst einen Datenspeicher für mehrere Schlüssel. Es ist denkbar, dass ein akustisches Kommunikationsnetzwerk an einer erfindungsgemäßen prozesstechnischen Anlage mit einer speziell eingerichteten Schlüssel-Servereinrichtung ausgestaltet ist, die den Kommunikationspartnern der Anlage einen oder mehrere akustische Schlüssel bereitstellt. Die Bereitstellung der Schlüssel kann ausschließlich ausgehend von der Schlüssel-Servereinrichtung erfolgen.

Es ist denkbar, dass eine Kontrollelektronik, wie eine Leitwarte der prozesstechnischen Anlage mit der Schlüssel-Servereinrichtung elektronisch kommuniziert, um die Schlüssel-Servereinrichtung anzuweisen, einen oder mehrere Schlüssel zu generieren und akustisch an die Kommunikationspartner in der prozesstechnischen Anlage bereitzustellen. Beispielsweise kann eine Kontrollelektronik selbst, welche mit dem Internet in Verbindung stehen kann, von einem direkten Kontakt mit dem oder den akustischen Netzwerk(en) einer prozesstechnischen Anlage abgeschirmt sein und nur dazu in der Lage sein, mit einer Schlüssel-Servereinrichtung zur Veranlassung der Bereitstellung von einem oder mehreren Schlüsseln von der Schlüssel-Servereinrichtung zu kommunizieren, wobei insbesondere die Kontrollelektronik keine Informationen hinsichtlich des Schlüssels mit dem Schlüssel-Servereinrichtung austauscht, insbesondere keine Anweisungen hinsichtlich der Definition des Schlüssels bereitstellt und insbesondere keine Informationen über die Spezifikationen des Schlüssels, wie beispielsweise dessen Länge, dessen Inhalt, oder die Umsetzung der akustischen Kommunikationstechnik, welche zur Verwendung des Schlüssels über das akustische Netzwerk gebraucht wird.

Weitere bevorzugte Ausführungen der Erfindung können den Unteransprüchen entnommen werden. Weitere Eigenschaften, Vorteile und Merkmale der Erfindung werden durch die folgende Beschreibung einer bevorzugten Ausführung der Erfindung anhand der beiliegenden Zeichnung deutlich, in denen zeigt:

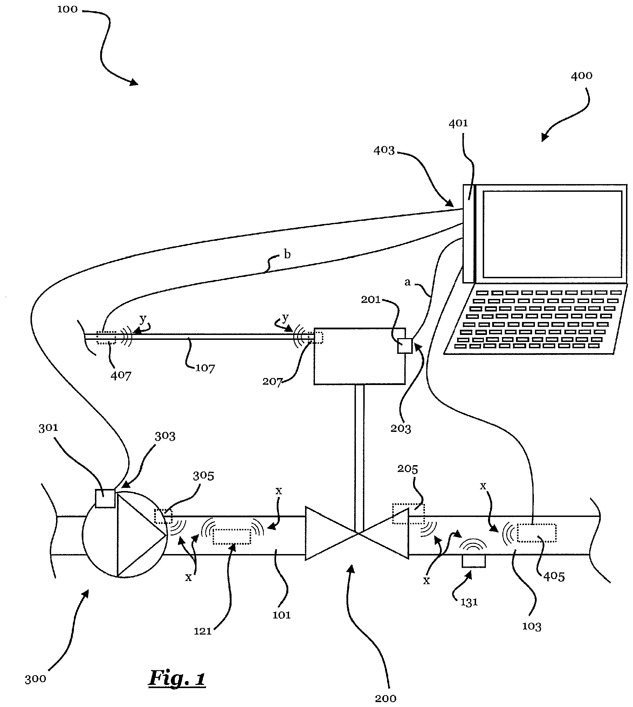

- Fig.1: eine schematische Darstellung einer erfindungsgemäßen prozesstechnischen Anlage mit erfindungsgemäßen Feldgeräten und einer erfindungsgemäßen Kontrollelektronik.

Eine erfindungsgemäße Anlage ist im Allgemeinen mit Bezugszeichen 100 versehen. Die Anlage umfasst als Hauptbestandteile mehrere Rohrleitungen 101, 103, 107 zum Führen von Anlagenfluid, mehrere Feldgeräte, die hier exemplarisch in Form eines Stellventils 200 und einer Pumpe 300 dargestellt sind, sowie eine Kontrollelektronik 400.

Bei dem in Fig. 1 abgebildeten Ausschnitt aus einer prozesstechnischen Anlage 100 ist ein Prozessfluid führender Rohrleitungssystemabschnitt abgebildet, der sich aus einer Prozessfluid-Pumpe 300, daran angeschlossenen Rohrleitungsabschnitten 101 und 103 zusammengesetzt, die durch ein Stellventil 200 mit einander verbunden sind. Das Stellventil 200 hat einen pneumatischen Stellantrieb, der über die Pneumatikleitung 107 mit Druckluft versorgt wird.

Die abgebildeten Feldgeräte, also das Stellventil 200 und die Pumpe 300, sind jeweils mit einer Kommunikationselektronik 201 bzw. 301 ausgestattet, die über eine elektronische Kommunikationsleitung mit der Kommunikationseinrichtung 401 der Kontrollelektronik 400 verbunden sind.

Die Kontrollelektronik 400 kann beispielsweise über den Kontrollausgang 403 der Kommunikationseinrichtung 401 der Pumpe eine Soll-Drehzahl mitteilen. Die Soll-Drehzahl wird von der Kommunikationselektronik 301 der Pumpe 300 empfangen und einer nicht näher dargestellten Steuerelektronik der Pumpe 300 mitgeteilt, damit die Pumpe entsprechend betätigt wird. Die Kommunikationselektronik 301 hat einen Signaleingang 303, an dem sie das Stellsignal s empfängt. Gemäß dem erfindungsgemäßen Verfahren kann das Stellsignal s ein verschlüsseltes elektronisches Signal sein.

Das Stellventil 200 weist eine nicht abgebildete Steuerelektronik auf, die mit der Kommunikationselektronik 201 des Stellventils 200 zusammenwirkt. Über die Kommunikationselektronik 201 des Stellventils 200 können der Kontrollelektronik 400 elektronische Daten betreffend den Zustand des Stellventils 200 gesendet werden, beispielsweise eine Ist-Stellung des Ventilglieds, ein Ist-Stelldruck in einer pneumatischen Antriebskammer des Stellventils, ein Ist-Prozessfluiddruck stromaufwärts des Stellventils 200, ein Ist-Prozessfluiddruck stromabwärts des Stellventils 200, ein Ist-Geräuschmesssignal betreffend akustische Emissionen an dem Stellventil 200 oder dergleichen. Sofern die Elektronik des Stellventils 200 über Diagnosefunktionalitäten verfügt, kann die Kommunikationselektronik der Kontrollelektronik 400 neben Ist-Messwerten (siehe oben) verarbeitete Diagnosedaten und/oder Zustandsdaten betreffend das Stellventil 200 senden.

Die elektronischen Signale von dem Stellventil 200 werden an den Signalausgang 203 beispielsweise kabelgebunden oder per Funk ausgegeben, um an dem Kontrolleingang 403 der Kontrollelektronik 400 empfangen zu werden. Die Kontrollelektronik 400 kann über die Kommunikationseinrichtung 401 elektrische Signale an das Stellventil 200 senden, wie ein Soll-Stellsignal, ein Not-Schließsignal oder dergleichen. Die Signale von der Kontrollelektronik 400 werden an dem Signalausgang 403 an das Stellventil 200 versendet, um von dessen Signaleingang 203 empfangen zu werden. Bei diesem Beispiel sind die Schnittstellen 203 bzw. 403 bidirektional, d.h. als Signalaus- und/oder -eingang 203 bzw. als Kontrollsignalaus- und/oder -eingang 403 ausgeführt. Die elektronischen Signale a, die zwischen der Kommunikationselektronik 201 des Stellventils und der Kommunikationseinrichtung 401 der Kontrollelektronik 400 ausgetauscht werden können gemäß der Erfindung verschlüsselt kommuniziert werden.

Ein erfindungsgemäßes Feldgerät, beispielsweise das in Fig. 1 dargestellte Stellventil, kann beispielsweise eine akustische Sende- und/oder Empfangsvorrichtung 205 für die Prozessfluidleitung 101, 103 aufweisen. Alternativ oder zusätzlich kann ein erfindungsgemäßes Stellventil 200 eine akustische Sende- und/oder Empfangsvorrichtung 207 zum Übermitteln eines Akustiksignals y über eine Hilfsenergiefluid führende Pneumatikleitung 107 aufweisen. Die akustische Sende- und/oder Empfangsvorrichtung 207 für die Pneumatikfluidleitung 107 kann beispielsweise dazu eingerichtet sein, ein Ultraschall-Signal im Bereich oberhalb von 20 kHz durch die Wandung der Pneumatikleitung 107 zu übermitteln. Eine Pneumatikleitung 107 kann mit einem Abstand zu dem Stellventil 200 an eine akustische Empfangsvorrichtung 407 der Kontrollelektronik 400 angebracht sein. Da die Kontrollelektronik 400 üblicherweise in einem büroartigen Bereich der prozesstechnischen Anlage angeordnet ist, wohingegen eine Pneumatikfluidleitung 107 in einem beispielsweise explosionsgeschützten Bereich der prozesstechnischen Anlage 100 angeordnet sein kann, ist eine Verbindungsleitung b zwischen der akustischen Empfangsvorrichtung 407 und der hierzu geordneten Kontrollelektronik 400 vorgesehen sein.

Ein in der Stellungsreglerelektronik des Stellventils 200 (nicht näher dargestellt) erzeugter Schlüssel für den Austausch von elektronischen Signalen a zwischen der Kontrollelektronik 400 und dem Stellventil 200 kann in ein akustisches Signal y umgewandelt werden. Der Schlüssel kann als akustisches Signal y von der akustischen Sende- und/oder Empfangsvorrichtung 207 über die Wandung der Pneumatikfluid-Rohrleitung 107 an die akustische Empfangsvorrichtung 407 der Kontrollelektronik 400 versandt werden. Die Empfangsvorrichtung 407 der Kontrollelektronik 400 kann einen Akustik-Digitalwandler zum Erzeugen eines elektronischen, verschlüsselten Signals b für die Kontrollelektronik 400 umfassen. Mithilfe der akustischen Signalübertragung y von dem Stellgerät 200 zu der Kontrollelektronik 400 können akustische Signale y betreffend den Schlüssel vom Stellventil 200 an die Kontrollelektronik 400 übertragen werden, welcher zum Verschlüsseln der elektronischen Signale a zu verwenden ist.

Alternativ oder zusätzlich kann das Stellventil 200 eine akustische Sendevorrichtung 205 aufweisen, um über das Prozessfluid führende Rohrleitungssystem 101, 103 akustische Signale x zu versenden, wobei als Trägermedium das Prozessfluid selbst dienen kann. Beispielsweise kann die akustische Sendevorrichtung 205 akustische Signale x in das Prozessfluid abgeben. An oder in der Rohrleitung 103 kann eine Schlüssel-Servervorrichtung 131 angeordnet sein, die die akustischen Signale x, welche Schlüssel für die elektronische Kommunikation zwischen dem Stellventil 200 und anderen Komponenten der prozesstechnischen Anlage 100 repräsentieren, empfangen und archivieren. Es ist denkbar, dass die Schlüssel-Server die Schlüssel zur Kommunikation zwischen unterschiedlichen Kommunikationspartnern der prozesstechnischen Anlage 100 bereitstellt und entsprechende akustische Signale x aussendet. Beispielsweise kann die Servereinrichtung 131 einen Schlüssel zur sicheren Kommunikation zwischen dem Stellventil 200 und der Kontrollelektronik 400 bereitstellen und das akustische Signal x über das Prozessfluid in der Prozessfluidleitung 103 versenden. Akustische Empfangsvorrichtungen 205 und 405 des Stellventils 200 und der Kontrollelektronik 400 können diese akustischen Signale x empfangen. Beispielsweise kann die Schlüssel-Servereinrichtung 131 auf Veranlassung von der Kontrollelektronik 400 oder in regelmäßigen Abständen ein Akustiksignal x, das einen Schlüssel zur verschlüsselten Kommunikation zwischen dem Stellventil 200 und der Kontrollelektronik 400 repräsentiert, erzeugen und abgeben. Die Übertragung elektronischer Signale a zwischen der Stellventil 200 und der Kontrollelektronik 400 kann nachfolgend mit dem von der Schlüssel-Servereinrichtung 131 bereitgestellten Schlüssel erfolgen. Wenn nach einem vorbestimmten Zeitintervall ein neuer Schlüssel als Akustiksignal x von der Servereinrichtung 131 versendet wird, kann ab diesem Zeitpunkt der neue Schlüssel zur Verschlüsselung elektronischer Signale x verwendet werden. Eine Schlüssel-Servereinrichtung 131 kann alternativ auch verwendet werden, um eine Reihe von Schlüsseln, beispielsweise von der Kontrollelektronik 400 über die Akustik-Sendervorrichtung 405, als Akustiksignal x zu empfangen und zu speichern und bei Bedarf, auf Veranlassung oder in regelmäßigen Abständen als Akustiksignal x der Akustiksignalempfangsvorrichtung 205 des Stellventils 200, etc., bereitzustellen.

Ein weiteres Feldgerät, beispielsweise die Pumpe 300, kann eine eigene akustische Sendevorrichtung 305 zur Ermittlung von akustischen Signalen x durch das Prozessfluid aufweisen. Falls der Abstand zwischen der akustischen Sende- und/oder Empfangsvorrichtung 305 der Pumpe 300 und der akustischen Sende- und/oder Empfangsvorrichtung 405 der Kontrollelektronik 400 so hoch ist, dass damit zu rechnen ist, dass die Signalübermittlung nicht ausreichend hochwertig ist, um einen Schlüssel mit einer ausreichender Qualität zwischen den beiden akustischen Sende- und/oder Empfangsvorrichtungen der unterschiedlichen Kommunikationspartnern zu übertragen (hier: Pumpe 300 und Kontrollelektronik 400), kann ein Akustiksignalrepeater 121 vorgesehen sein, der jedes empfangene akustische Signal x verstärkt und weitersendet.

Der Akustiksignalrepeater 121 kann Teil einer Kette von Repeatern sein. Auch die akustischen Sende- und/oder Empfangsvorrichtungen 205 beispielsweise des Stellventils 200, oder eines anderen Feldgeräts kann dazu eingerichtet sein, als Akustiksignalrepeater zu wirken. Bei dem abgebildeten Beispiel kann beispielsweise ein akustisches Signal von dem akustischen Signalgeber 305 der Pumpe 300 als akustisches Signal x über das Prozessfluid zu dem Akustiksignalrepeater 121 übermittelt werden, um von dort als verstärktes und ansonsten gleiches Akustiksignal x an die akustische Sende- und/oder Empfangsvorrichtung 205 des Stellventils 200 gesendet zu werden. Die akustische Sende- und/oder Empfangsvorrichtung 205 des Stellventils 200 (oder eines anderen Feldgerätes der prozesstechnischen Anlage 100) kann ein Akustiksignal x, welches nicht an das Stellventil 200 adressiert ist, empfangen, verstärken und weiterleiten, beispielsweise an die Akustiksignalempfänger 405 der Kontrollelektronik 400. Der von der Kontrollelektronik 400 mitgeteilte Schlüssel kann zur Verschlüsselung der elektronischen Signale s von der Kontrollelektronik 400 an die Pumpe 300 verwendet werden.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 100: Anlage
- 101, 103, 107: Rohrleitungen
- 131: Schlüssel-Servervorrichtung
- 121: Akustiksignalrepeater
- 200: Stellventil
- 201, 202, 301: Kommunikationselektronik
- 203, 303: Signaleingang bzw. Signalausgang
- 205, 207, 305 405, 407: akustische Sende- und/oder Empfangsvorrichtung
- 300: Pumpe
- 400: Kontrollelektronik
- 401: Kommunikationseinrichtung
- 403: Kontrolleingang bzw. Kontrollausgang

- a: elektronisches Signal
- b: elektronisch verschlüsseltes Signal
- x, y: Akustiksignal
- s: Stellsignal

## Patentansprüche

1. Verfahren zum verschlüsselten Kommunizieren in einer prozesstechnischen Anlage (100), wie eine chemische Anlage, ein Kraftwerk, eine Lebensmittel verarbeitende Anlage oder dergleichen, zwischen wenigstens einem ersten und einem zweiten Kommunikationspartner, die wenigstens ein Feldgerät, wie eine Stellarmatur, beispielsweise ein Stellventil (200) oder eine Pumpe (300), zum Einstellen eines Prozessfluids der prozesstechnischen Anlage, und/oder eine Kontrollelektronik (400) zum Überwachen, Steuern und/oder Regeln von Prozessen der prozesstechnischen Anlage umfassen, wobei
- ein Schlüssel zum Codieren von elektronischen Signalen betreffend die prozesstechnische Anlage, wie Stellsignale, Messsignale, Zustandssignale, Warnsignale oder dergleichen, bereitgestellt wird, **dadurch gekennzeichnet, dass**
- der Schlüssel als Akustiksignal (x, y) über eine Anlagenfluid führende Rohrleitung (101, 103, 107), von dem ersten Kommunikationspartner an den zweiten Kommunikationspartner übermittelt wird.

2. Verfahren nach Anspruch 1, wobei ein elektronisches Signal (a, b), wie ein Stellsignal, Messsignal, Zustandssignal, Warnsignal oder dergleichen, bereitgestellt wird und wobei das bereitgestellte elektronische Signal (a, b) mit dem Schlüssel codiert wird und wobei das codierte Signal von einem Kommunikationspartner an einen anderen Kommunikationspartner übermittelt wird.

3. Feldgerät, wie eine Stellarmatur, beispielsweise ein Stellventil (200) oder eine Pumpe (300), zum Einstellen eines Prozessfluids, für eine prozesstechnische Anlage (100), wie eine chemische Anlage, ein Kraftwerk, eine Lebensmittel verarbeitende Anlage oder dergleichen, umfassend:
eine Kommunikationselektronik (201, 301) zum Senden und/oder Empfangen von elektronischen Signalen (a, b), wie Stellsignale, Messsignale, Zustandssignale, Warnsignale oder dergleichen, an eine bzw. von einer Kontrollelektronik (400) zum Überwachen, Steuern und/oder Regeln von Prozessen der prozesstechnische Anlage (100), wobei die Kommunikationselektronik (201, 301) dazu eingerichtet ist mit einem Schlüssel codierte elektronische Signale (a, b) zu verarbeiten und einen elektronischen Signalaus- und/oder -eingang (203, 303) für die elektronischen Signale (a, b) aufweist, **dadurch gekennzeichnet, dass**
das Feldgerät ferner eine akustischen Sende- und/oder Empfangsvorrichtung (205, 207, 305) zum Übermitteln des Schlüssels als Akustiksignal (x, y) über eine Anlagenfluid, wie eine Prozessfluid oder ein Hilfsenergiefluid, führende Rohrleitung (101, 103, 107) an die bzw. von der Kontrollelektronik (400) aufweist.

4. Kontrollelektronik (400) für eine prozesstechnische Anlage (100), wie eine chemische Anlage, ein Kraftwerk, eine Lebensmittel verarbeitende Anlage oder dergleichen, zum Überwachen, Steuern und/oder Regeln von Prozessen der prozesstechnischen Anlage (100), umfassend:
eine Kommunikationseinrichtung (401) zum Senden und/oder Empfangen von elektronischen Signalen (a, b), wie Stellsignale, Statussignale, Warnsignale oder dergleichen, an ein bzw. von einem Feldgerät der prozesstechnischen Anlage (100), wie eine Stellarmatur, beispielsweise ein Stellventil (200) oder eine Pumpe (300), zum Einstellen eines Prozessfluids, wobei die Kommunikationseinrichtung (401) dazu eingerichtet ist, mit einem Schlüssel codierte elektronische Signale (a, b) zu verarbeiten, und wobei die Kommunikationseinrichtung (401) einen elektronischen Kontrollaus- und/oder -eingang (403) für die elektronischen Signale (a, b) aufweist, **dadurch gekennzeichnet, dass**
die Kontrollelektronik (400) ferner wenigstens eine akustischen Sende- und/oder Empfangsvorrichtung (405, 407) zum Übermitteln des Schlüssels als Akustiksignal (x, y) über eine Anlagenfluid, wie Prozessfluid oder Hilfsenergiefluid, führende Rohrleitung (101, 103, 107) an wenigstens ein bzw. von wenigstens einem Feldgerät aufweist.

5. Prozesstechnische Anlage (100), wie eine chemische Anlage, ein Kraftwerk, eine Lebensmittel verarbeitende Anlage oder dergleichen, mit mehreren Rohrleitungen (101, 103, 107) zum Führen von wenigstens einem Anlagenfluid, wie ein Prozessfluid oder ein Hilfsenergiefluid, wenigstens einem Feldgerät, wie eine Stellarmatur, beispielsweise ein Stellventil oder eine Pumpe, zum Einstellen des Prozessfluids, und einer Kontrollelektronik (400) zum Überwachen, Steuern und/oder Regeln von Prozessen der prozesstechnische Anlage, **gekennzeichnet durch**:
wenigstens eine akustischen Sendevorrichtung (205, 207, 305, 405, 407) zum Senden eines Schlüssels zum Codieren von elektronischen Signalen (a, b) betreffend die prozesstechnische Anlage, wie Stellsignale, Messsignale, Zustandssignale, Warnsignale oder dergleichen, als Akustiksignal (x, y) über wenigstens eine Rohrleitung (101, 103, 107); und
wenigstens eine akustischen Empfangsvorrichtung (205, 207, 305, 405, 407) zum Empfangen des Schlüssels als Akustiksignal (x, y) über die wenigstens eine Rohrleitung (101, 103, 107),
wobei die Sendevorrichtung (205, 207, 305, 405, 407) und die Empfangsvorrichtung (205, 207, 305, 405, 407) derart über die wenigstens eine Rohrleitung (101, 103, 107) mit einander verbunden sind, dass ein Austausch des Schlüssels zwischen der Sendevorrichtung (205, 207, 305, 405, 407) und der Empfangsvorrichtung (205, 207, 305, 405, 407) auf akustischer Kommunikationstechnik basiert.

6. Prozesstechnische Anlage nach Anspruch 5, wobei die wenigstens eine Rohrleitung (101, 103, 107) zum Übertragen des Schlüssels als Akustiksignal (x, y) vollständig innerhalb einer physikalischen Abschirmung, wie einer Mauer, einem Zaun oder dergleichen, untergebracht ist.

7. Prozesstechnische Anlage nach Anspruch 5 oder 6, wobei die wenigstens eine akustischen Sendevorrichtung (205, 207, 305, 405, 407) und/oder die wenigstens eine akustische Empfangsvorrichtung (205, 207, 305, 405, 407) zur Verwendung der Rohrwandung als Übertragungsmedium eingerichtet und/oder an der Rohrleitung (101, 103, 107) angebracht ist.

8. Prozesstechnische Anlage nach Anspruch 5 oder 6, wobei die wenigstens eine akustische Sendevorrichtung (205, 207, 305, 405, 407) und/oder die wenigstens eine akustische Empfangsvorrichtung (205, 207, 305, 405, 407) zur Verwendung des Anlagenfluides als Übertragungsmedium eingerichtet und/oder in der Rohrleitung (101, 103, 107) angeordnet ist.

9. Prozesstechnische Anlage nach einem der Ansprüche 5 bis 8, ferner umfassend wenigstens einen, insbesondere als Feldgerät nach Anspruch 3 ausgestalteten, Akustiksignalrepeater (121), der an der Rohrleitung (101, 103, 107) zwischen der wenigstens einen akustischen Sendevorrichtung (205, 207, 305, 405, 407) und der wenigstens einen akustischen Empfangsvorrichtung (205, 207, 305, 405, 407) angeordnet ist und der dazu eingerichtet ist, ein Akustiksignal (x, y) von der wenigstens einen akustischen Sendevorrichtung (205, 207, 305, 405, 407) zu Empfangen, gegebenenfalls zu Verstärken, und der dazu eingerichtet ist, das Akustiksignal (x, y), insbesondere über wenigstens einen weiteren Akustiksignalrepeater, an die wenigstens eine akustische Empfangsvorrichtung (205, 207, 305, 405, 407) zu Senden.

10. Prozesstechnische Anlage nach einem der Ansprüche 5 bis 9, ferner umfassend wenigstens eine, insbesondere als Feldgerät nach Anspruch 3 ausgestaltete, Schlüssel-Servereinrichtung (131), die eine akustischen Sende- und/oder Empfangsvorrichtung (205, 207, 305, 405, 407) zum Übermitteln des Schlüssels als Akustiksignal (x, y) insbesondere über eine Prozessfluid führende Rohrleitung (101, 103, 107), vorzugsweise an die bzw. von der Kontrollelektronik (400) und/oder vorzugsweise an wenigstens ein bzw. von wenigstens einem Feldgerät, aufweist und die einen Datenspeicher für mehrere Schlüssel umfasst.

## Claims

1. Method for the encryption communication in a process plant (100), such as a chemical plant, a power plant, a food-processing plant or such, between at least a first and a second communication partner, which comprise at least one field device, such as an actuator, for example a control valve (200) or a pump (300), for adjusting a process fluid of a process plant, and/or a control electronics (400) for supervising, controlling and/or regulating processes of the process plant, wherein
- a key for coding of electronic signals regarding the process plant, such as actuation signals, measurement signals, state signals, warning signals or such, are provided, **cha racterized** in that
- the key is transmitted as acoustic signal (x, y) via a ductwork (101, 103, 107) guiding plant fluid from the first communication partner to the second communication partner.

2. Method according to claim 1, wherein an electronic signal (a, b), such as an actuation signal, measurement signal, state signal, warning signal or such, is provided and wherein the provided electronic signal (a, b) is coded with the key and wherein the coded signal is transmitted from one communication partner to another communication partner.

3. Field device, such as an actuator, for example a control valve (200) or a pump (300), for adjusting a process fluid, for a process plant (100), such as a chemical plant, a power plant, a food-processing plant or such, comprising:
a communication electronics (201, 301) for sending and/or receiving of electronic signals (a, b), such as actuation signals, measurement signals, state signals, warning signals or such, to a and from a control electronics (400), respectively, for supervising, controlling and/or regulating processes of the process plant (100), wherein the communication electronics (201, 301,) being configured to process electronic signals (a, b) coded with a key and having an electronic signal output and/or input (203, 303) for the electronic signals (a, b),
**characterized in that**
the field device further comprising an acoustic send and/or receiving apparatus (205, 207, 305) for transmitting a key as acoustic signal (x, y) via a ductwork (101, 103, 107) guiding plant fluid, such as process fluid or an auxiliary fluid, at the and from the control electronics (400), respectively.

4. Control electronics (400) for a process plant (100), such as a chemical plant, a power plant, a food-processing plant of such, for supervising, controlling and/or regulating processes of the process plant (100), comprising:
a communication apparatus (401) for sending and/or receiving electronic signals (a, b), such as actuation signals, status signals, warning signals or such, to a and from a field device, respectively, of the process plant (100), such as an actuator, for example a control valve (200) or a pump (300), for adjusting a process fluid, wherein the communication apparatus (401) being configured to process electronic signals (a, b) coded with a key and wherein the communication apparatus (401) having an electronic control output and/or input (403) for the electronic signals (a, b),
**characterized in that**
the control electronics (400) further comprises at least one acoustic send and/or
receiving apparatus (405, 407) for transmitting the key as acoustic signal (x, y) via a ductwork (101, 103, 107) guiding plant fluid, such as process fluid or auxiliary fluid, to at least one and from at least one field device, respectively.

5. Process plant (100), such as a chemical plant, a power plant, a food-processing plant or such, with several tubes (101, 103, 107) for guiding at least one plant fluid, such as a process fluid or auxiliary fluid, at least a field device such as an actuator, for example a control valve or a pump, for adjusting the process fluid, and a control electronics (400) for supervising, controlling and/or regulating processes of the power plant, **characterized in that**
at least one acoustic send apparatus (205, 207, 305, 405, 407) for sending a key for coding electronic signals (a, b) regarding the process plant, such as actuation signals, measurement signals, state signals, warning signals or such, as acoustic signal (x, y) via at least one tube (101, 103, 107); and
at least one acoustic receiving apparatus (205, 207, 305, 405, 407) for receiving a key as acoustic signal (x, y) via the at least one tube (101, 103, 107),
wherein the send apparatus (205, 207, 305, 405, 407) and the receiving apparatus (205, 207, 305, 405, 407) are connected via the at least one tube (101, 103, 107) in such a way that the exchange of keys between the send apparatus (205, 207, 305, 405, 407) and the receiving apparatus (205, 207, 305, 405, 407) is based on acoustic communication technology.

6. Process plant according to claim 5, wherein the at least one tube (101, 103, 107) for transmitting the key as acoustic signal (x, y) is entirely accommodated in a physical screen, such as a wall, a fence or such.

7. Process plant according to claim 5 or 6, wherein the at least one acoustic send apparatus (205, 207, 305, 405, 407) and/or the at least one acoustic receiving apparatus (205, 207, 305, 405, 407) is configured for the usage of the tube wall as transmission medium and/or arranged in the tube (101, 103, 107).

8. Process plant according to claim 5 or 6, wherein the at least one acoustic send apparatus (205, 207, 305, 405, 407) and/or the at least one acoustic receiving apparatus (205, 207, 305, 405, 407) is configured for the usage of the plant fluid as transmission medium and/or arranged in the tube (101, 103, 107).

9. Process plant according to one of the claims 5 to 8, further comprising at least one acoustic signal repeater (121), particularly designed as field device according to claim 3, which is arranged at the tube (101, 103, 107) between the at least one acoustic send apparatus (205, 207, 305, 405, 407) and the at least one acoustic receiving apparatus (205, 207, 305, 405, 407) and which is configured to receive, possibly to amplify, an acoustic signal (x, y) from the at least one acoustic send apparatus (205, 207, 305, 405, 407) and, which is configured to send the acoustic signal (x, y), particularly via the at least one further acoustic signal repeater, to the at least one acoustic receiving apparatus (205, 207, 305, 405, 407).

10. Process plant according to one of the claims 5 to 9, further comprising at least one key server apparatus (131), preferably designed as field device according to claim 3 having an acoustic send and/or receiving apparatus (205, 207, 305, 405, 407) for transmitting the key as acoustic signal (x, y), particularly via a tube (101, 103, 107) guiding process fluid, preferably at the and from the control electronics (400), respectively, and/or preferably to at least one and from at least one device field, respectively, and comprising a data storage for several keys.

## Revendications

1. Procédé de communication codée dans une installation technique de traitement (100), comme une installation chimique, une centrale électrique, une installation transformant des aliments ou similaire, entre au moins un premier et un second partenaire de communication, qui comprennent au moins un appareil de champ, comme un robinet de réglage, par exemple une vanne de réglage (200) ou une pompe (300), pour le réglage d'un fluide de traitement de l'installation technique de traitement, et/ou un système électronique de contrôle (400) pour la surveillance, la commande et/ou la régulation de processus de l'installation technique de traitement,
- une clé de codage de signaux électroniques concernant l'installation technique de traitement, comme des signaux de réglage, des signaux de mesure, des signaux d'état, des signaux d'avertissement ou similaires étant mise à disposition, **caractérisé en ce que**
- la clé est transmise sous forme de signal acoustique (x, y) par une canalisation conduisant du fluide d'installation (101, 103, 107) du premier partenaire de communication vers le second partenaire de communication.

2. Procédé selon la revendication 1, dans lequel un signal électronique (a, b), comme un signal de réglage, un signal de mesure, un signal d'état, un signal d'avertissement ou similaire, est mis à disposition et le signal électronique mis à disposition (a, b) est codé avec la clé et le signal codé est transmis par un partenaire de communication à un autre partenaire de communication.

3. Appareil de champ, comme un robinet de réglage, par exemple une vanne de réglage (200) ou une pompe (300), pour le réglage d'un fluide de traitement pour une installation technique de traitement (100), comme une installation chimique, une centrale électrique, une installation transformant des aliments ou similaire, comprenant :
un système électronique de communication (201, 301) pour l'envoi et/ou la réception de signaux électroniques (a, b), comme des signaux de réglage, des signaux de mesure, des signaux d'état, des signaux d'avertissement ou similaires, à ou depuis un système électronique de contrôle (400) pour la surveillance, la commande et/ou la régulation de processus de l'installation technique de traitement (100), le système électronique de communication (201, 301) étant conçu pour traiter des signaux électroniques (a, b) codés avec une clé et présentant une sortie et/ou entrée électronique de signaux (203, 303) pour les signaux électroniques (a, b),
**caractérisé en ce que**
l'appareil de champ présente en outre un dispositif acoustique d'envoi et/ou de réception (205, 207, 305) pour la transmission de la clé sous forme de signal acoustique (x, y) par une canalisation (101, 103, 107) conduisant un fluide de traitement ou un fluide d'énergie auxiliaire vers ou depuis le système électronique de contrôle (400).

4. Système électronique de contrôle (400) pour une installation technique de traitement (100), comme une installation chimique, une centrale électrique, une installation transformant des aliments ou similaire, pour la surveillance, la commande et/ou la régulation de processus de l'installation technique de traitement (100), comprenant :
un dispositif de communication (401) pour l'envoi et/ou la réception de signaux électroniques (a, b), comme des signaux de réglage, des signaux d'état, des signaux d'avertissement ou similaires, à ou depuis un appareil de champ de l'installation technique de traitement (100), comme un robinet de réglage, par exemple une vanne de réglage (200) ou une pompe (300), pour le réglage d'un fluide de traitement, le dispositif de communication (401) étant conçu pour traiter des signaux électroniques (a, b) codés avec une clé, et le dispositif de communication (401) présentant une sortie et/ou entrée électronique (403) pour les signaux électroniques (a, b),
**caractérisée en ce que**
le système électronique de contrôle (400) présente en outre au moins un dispositif acoustique d'envoi et/ou de réception (405, 407) pour la transmission de la clé sous forme de signal acoustique (x, y) par une canalisation (101, 103, 107) conduisant du fluide d'installation, comme du fluide de traitement ou du fluide d'énergie auxiliaire à au moins un ou depuis au moins un appareil de champ.

5. Installation technique de traitement (100), comme une installation chimique, une centrale électrique, une installation transformant des aliments ou similaire, comportant plusieurs canalisations (101, 103, 107) pour la conduite d'au moins un fluide d'installation, comme un fluide de traitement ou un fluide d'énergie auxiliaire, au moins un appareil de champ, comme un robinet de réglage, par exemple une vanne de réglage ou une pompe, pour le réglage du fluide de traitement, et un système électronique de contrôle (400) pour la surveillance, la commande et/ou la régulation de processus de l'installation technique de traitement, **caractérisée par** :
au moins un dispositif acoustique d'envoi (205, 207, 305, 405, 407) pour l'envoi d'une clé de codage de signaux électroniques (a, b) concernant l'installation technique de traitement, comme des signaux de réglage, des signaux de mesure, des signaux d'état, des signaux d'avertissement ou similaires, sous forme de signal acoustique (x, y) par au moins une canalisation (101, 103, 107) ; et
au moins un dispositif acoustique de réception (205, 207, 305, 405, 407) pour la réception de la clé sous forme de signal acoustique (x, y) par l'au moins une canalisation (101, 103, 107),
le dispositif d'envoi (205, 207, 305, 405, 407) et le dispositif de réception (205, 207, 305, 405, 407) étant raccordés l'un à l'autre par l'au moins une canalisation (101, 103, 107) de manière à ce qu'un échange de la clé entre le dispositif d'envoi (205, 207, 305, 405, 407) et le dispositif de réception (205, 207, 305, 405, 407) soit basé sur une technique de communication acoustique.

6. Installation technique de traitement selon la revendication 5, dans laquelle l'au moins une canalisation (101, 103, 107) permettant de transmettre la clé sous forme de signal acoustique (x, y) est intégralement dans un blindage physique, comme un mur, une clôture ou similaire.

7. Installation technique de traitement selon la revendication 5 ou 6, dans laquelle l'au moins un dispositif acoustique d'envoi (205, 207, 305, 405, 407) et/ou l'au moins un dispositif acoustique de réception (205, 207, 305, 405, 407) est conçu pour utiliser la paroi du tuyau comme fluide de transmission et/ou est installé au niveau de la canalisation (101, 103, 107).

8. Installation technique de traitement selon la revendication 5 ou 6, dans laquelle l'au moins un dispositif acoustique d'envoi (205, 207, 305, 405, 407) et/ou l'au moins un dispositif acoustique de réception (205, 207, 305, 405, 407) est conçu pour utiliser la paroi du tuyau comme moyen de transmission et/ou est installé dans la canalisation (101, 103, 107).

9. Installation technique de traitement selon une des revendications 5 à 8, comprenant en outre au moins un répéteur de signal acoustique (121) se présentant en particulier sous forme d'un appareil de champ selon la revendication 3, qui est disposé au niveau de la canalisation (101, 103, 107) entre l'au moins un dispositif acoustique d'envoi (205, 207, 305, 405, 407) et/ou l'au moins un dispositif acoustique de réception (205, 207, 305, 405, 407) et est conçu pour recevoir, le cas échéant pour amplifier, un signal acoustique (x, y) de l'au moins un dispositif acoustique d'envoi (205, 207, 305, 405, 407), et qui est conçu pour envoyer le signal acoustique (x, y), en particulier par l'intermédiaire d'au moins un autre répéteur de signal acoustique, à l'au moins un dispositif acoustique de réception (205, 207, 305, 405, 407).

10. Installation technique de traitement selon une des revendications 5 à 9, comprenant en outre au moins un dispositif serveur de clé (131), se présentant en particulier sous forme d'un appareil de champ selon la revendication 3, qui présente un dispositif acoustique d'envoi et/ou de réception (205, 207, 305, 405, 407) pour la transmission de la clé sous forme de signal acoustique (x, y) par une canalisation (101, 103, 107) conduisant du fluide de traitement, de préférence vers ou depuis le système électronique de contrôle (400) et/ou de préférence vers ou depuis au moins un appareil de champ, et qui comprend une mémoire de données pour plusieurs clés.
